# EUROPÄISCHE PATENTANMELDUNG

(11) **EP 0 615 826 A1**
(43) Veröffentlichungstag der Anmeldung: **21.09.1994**
(21) Anmeldenummer: 94103282.3
(22) Anmeldetag: 04.03.1994
(51) Int. Cl.: B29C 45/00, F24F 13/08

(54) **Verfahren zum Herstellen eines Luftauslasses**

(30) Priorität: 19.03.1993 DE 4308948
(71) Anmelder: SCHAKO METALLWARENFABRIK FERDINAND SCHAD KG, D-78600 Kolbingen (DE)
(72) Erfinder: Müller, Gottfried, D-78600 Kolbingen (DE); Hipp, Paul, D-78600 Kolbingen (DE)
(74) Vertreter: Weiss, Peter, Dr. rer.nat.

(57) **Zusammenfassung**

Bei einem Verfahren zum Herstellen eines Luftauslasses aus einem Einbaurahmen (1) mit einem eingesetzten Lüftungsgitter (5), soll das Lüftungsgitter (5) im Spritzverfahren, bevorzugt aus Kunststoff, hergestellt wird.

## Beschreibung

Die Erfindung betrifft ein Verfahren zum Herstellen eines Luftauslasses aus einem Einbaurahmen mit einem eingesetzten Lüftungsgitter.

Luftauslässe werden üblicher Weise heute aus Blech durch Abkanten, Schweißen, Krippen od. dgl. hergestellt. Hierfür sind eine Vielzahl von Arbeitsvorgängen notwendig, die viel Geld, Zeit und Mühe in Anspruch nehmen oder, wie beispielsweise das Schweißen, die Umwelt belasten.

Der vorliegenden Erfindung liegt die Aufgabe zugrunde, ein verfahren der o.g. Art wesentlich zu vereinfachen und zu verbilligen und dabei sehr viele Variationen zuzulassen.

Zur Lösung dieser Aufgabe führt, daß das Lüftungsgitter im Spritzverfahren, bevorzugt aus Kunststoff, hergestellt wird.

Das Neue an diesem Verfahren ist, daß das komplette Gitter in einem einzigen Spritzvorgang hergestellt wird. Sollten Lamellen vorgesehen sein, so lassen sich diese Lamellen heute zusammen mit dem Gitter spritzen, wobei die Lamellen in dem Gitter bewegtwerden können und selbsthemmend gelagert sind. Vom Erfindungsgedanken ist dabei auch das Spritzen der Einzelteile umfaßt.

Wie das Lüftungsgitter aussieht, ist von untergeordneter Bedeutung. Es ist eine derart große Vielzahl von verschiedenen Lüftungsgittern bekannt, daß sich eine Aufzählung der Möglichkeiten erübrigt.

Bevorzugt wird das Lüftungsgitter erst nach der Festlegung des Einbaurahmens in einer Wand, einer Decke, einem Boden od.dgl. in diesen Einbaurahmen eingesetzt. Dies hat den Vorteil, daß vor dem Einsetzen des Lüftungsgitters sämtliche Arbeiten in dem Raum erledigt sein können, so daß das Lüftungsgitter nicht mehr, beispielsweise durch Malerarbeiten, in Mitleidenschaft gezogen wird.

Das Lüftungsgitter soll dabei ein Gehäuse aufweisen, welches in dem Einbaurahmen klemmend gehalten wird. Dies kann beispielsweise durch Federn geschehen oder aber auch durch andere bekannte Rastelemente.

Ein wesentlicher Vorteil des erfindungsgemäßen Verfahrens besteht darin, daß Lüftungsgitter mit Verbindungselementen versehen werden können, so daß es möglich ist, eine Mehrzahl von Lüftungsgittern sowohl in horizontaler als auch in vertikaler Richtung miteinander zu verbinden. Ein derartiges Verbindungselement kann beispielsweise ein einfacher, dem Lüftungsgitter beim Herstellvorgang angespritzter Verbindungszapfen sein, der in eine entsprechende Öffnung in dem anderen Lüftungsgitter eingreift und dort rastend festgelegt ist. Entsprechende Randleisten, welche dann den eigentlichen Luftauslaß seitlich begrenzen, sind ebenfalls durch Rastknöpfe an dem Lüftungsgitter festlegbar.

Zum Übereinanderanordnen der Lüftungsgitter ist zwischen einem Randflansch des Einbaurahmens und einem Rahmen des Lüftungsgitters ein Einsteckschlitz vorgesehen, in den ein Rahmen des benachbarten Lüftungsgitters eingesteckt werden kann. Hier sind viele Variationen denkbar und sollen von der vorliegenden Erfindung umfaßt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 einen Querschnitt durch einen erfindungsgemäßen Luftauslaß;
Fig. 2 eine Frontansicht des Luftauslasses gem. Fig. 1;
Fig. 3 eine teilweise aufgebrochen dargestellte Draufsicht auf den Luftauslaß gem. Fig. 2;
Fig. 4 einen vergrößert dargestellten Ausschnitt aus dem Luftauslaß gem. Fig. 2 im eingekreisten Bereich;
Fig. 5 eine Serie von aneinandergesetzten Luftauslässen;

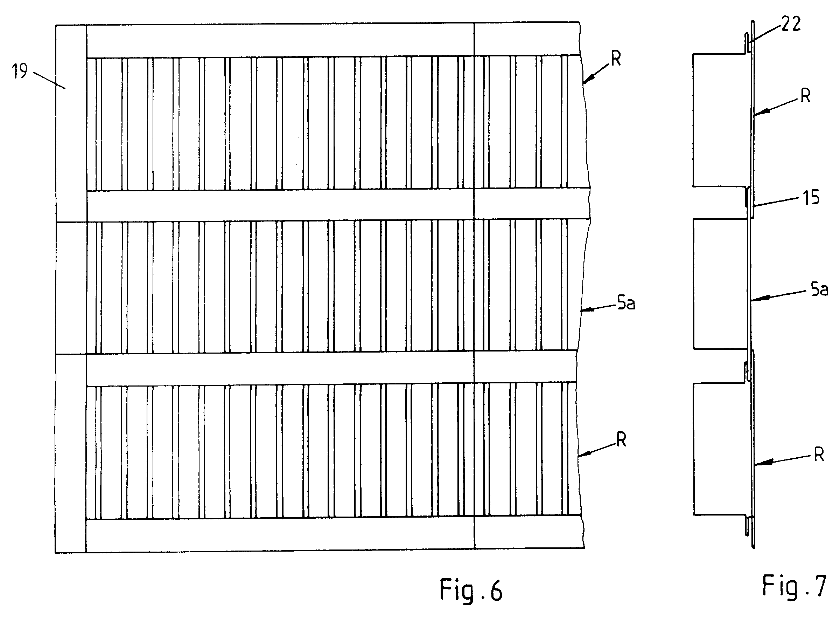

Fig. 6 eine Draufsicht auf übereinander angeordnete Luftauslässe;
Fig. 7 eine Seitenansicht der übereinander angeordneten Luftauslässe gem. Fig. 4.

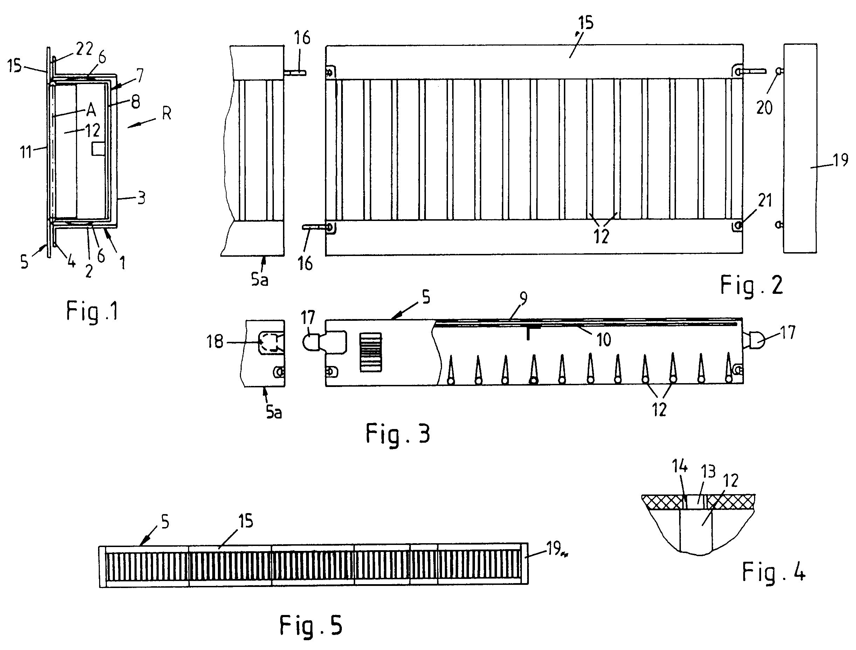

Ein erfindungsgemäßer Luftauslaß R weist gem. Fig. 1 einen Einbaurahmen 1 auf, der im wesentlichen aus einem kastenförmigen Gehäuserahmen 2 mit offener Rückseite 3 und einem umlaufenden Randflansch 4 besteht. In diesen Einbaurahmen 1 ist ein Lüftungsgitter 5 aus Kunststoff eingesetzt. Das Lüftungsgitter 5 stützt sich über Federn 6 gegen den Gehäuserahmen 2 ab.

Das Lüftungsgitter 5 weist im wesentlichen ein Gehäuse 7 auf, welches eine Rückwand 8 mit Längsschlitzen 9 (s. Fig. 3) besitzt. Der Rückwand 9 ist innerhalb des Gehäuses 7 ein Schlitzschieher 10 vorgesetzt.

Nach vorne ist das Gehäuse 7 offen und bildet so eine Auslaßöffnung 11, in welche Lamellen 12 zur Richtungsgebung für den Luftstrom eingesetzt sind. Dabei greifen die Lamellen 12 mit einem Drehbolzen 13 (s. Fig. 4) in eine entsprechende Öffnung 14 in dem Gehäuse 7 ein. Um den Drehbolzen 13 können die Lamellen 12 um ihre Achse A gedreht werden.

Die Auslaßöffnung 11 wird oben und unten von einem Rahmen 15 umgeben.

Gemäß der vorliegenden Erfindung soll das Lüftungsgitter 5 aus Kunststoff oder einem sonstigen spritzbaren Material hergestellt sein. Die Neuerung ist darin zu sehen, daß das komplette Lüftungsgitter 5 in einem Spritzgang hergestellt wird. Dabei lassen sich gleichzeitig die Lamellen 12 so Spritzen, daß sie wie bei einem normalen Gitter, beispielsweise gemäß der DE-OS 39 07 559 beweglich und selbsthemmend gelagert sind, so daß der Luftstrom die Lamellen 12 nicht verstellen kann. Ein großer Vorteil ist darin zu sehen, daß das Lüftungsgitter fix und fertig aus einem Spritzgußwerkzeug herausfällt.

Gemäß der vorliegenden Erfindung sollen nun an dem Lüftungsgitter seitlich Verbindungszapfen 16 beim Spritzen mit angeformt sein, welche dazu dienen, benachbarte Lüftungsgitter 5 miteinander zu verbinden. Dabei besteht im vorliegenden Ausführungsbeispiel jeder Verbindungszapfen aus einem Pilzkopf 17, der in eine entsprechend geformte Öffnung 18 in dem benachbarten Lüftungsgitter 5a eingeschoben werden kann und dort rastend festgelegt ist. Auf diese Weise kann ein Gitter zu einem endlosen Band zusammengesteckt werden, wobei ein dertiges zusammengestecktes Gitter in Fig. 5 gezeigt ist. Als Einzellängen bieten sich 50 mm, 100 mm, 200 mm und 300 mm an. Dadurch ist es möglich, alle Maßsprünge im 50 mm-Bereich zusammenzustecken und Gitter mit jedem gewünschten Maß zu liefern.

Den Abschluß eines Gesamtgitters bildet eine Randleiste 19, welcher oben und unten jeweils ein Rastknopf 20 angeformt ist. Diese Rastknöpfe 20 werden in entsprechende Ausnehmungen 21 in dem Rahmen 15 eingedrückt.

Bei der Montage wird zuerst der Einbaurahmen 1 beispielsweise in einer Wand oder einer Decke montiert. Um den Rahmen 1 können sämtliche anderen Arbeiten, insbesondere Gipser- und Malerarbeiten erledigt werden, ohne daß hierdurch das Lüftungsgitter in Mitleidenschaft gezogen wird.

Wenn die gesamten Arbeiten in einem Raum erledigt sind, wird/werden das oder die Lüftungsgitter 5 in den Einbaurahmen 1 eingedrückt. Dabei können sich die Federn 6 als Druck- oder Blattfedern am Einbaurahmen oder aber am Lüftungsgitter selbst befinden. Bei der Deckenmontage werden Federn noch durch einen speziellen kleinen Bügel arretiert, so daß das Lüftungsgitter 5 nicht nach unten fallen kann.

Die Lüftungsgitter können sowohl mit senkrechten als auch mit waagerechten Lamellen 12 geliefert werden.

Es versteht sich von selbst, daß alle möglichen Arten von Lüftungsgittern, auch Drallauslässe od.dgl., auf die gleiche Art gefertigt und in einen entsprechenden Einbaurahmen eingesetzt werden können. Dies gilt selbstverständlich auch für runde oder geometrisch anders geformte Auslässe.

Ein weiterer Vorteil der Erfindung liegt darin, daß das Lüftungsgitter bzw. der gesamte Luftauslaß unterschiedlich gefärbt werden kann. Z.B. kann der Rahmen 15 andersfarbig als die Lamellen 12 sein, oder am Rahmen kann auch ein schmaler Streifen ringsumlaufend in einem anderen Farbton als das gesamte Gitter ausgeführt werden. Dies bringt optisch einen sehr großen Vorteil.

Möglich ist auch, diese Auslässe übereinander anzuordnen. Aus Fig.1 ist erkennbar, daß sich zwischen Randflansch 4 und Rahmen 15 ein Einsteckschlitz 22 befindet. Dieser Einsteckschlitz 22 dient, wie in Fig. 5 gezeigt, der Aufnahme eines Rahmens 15 eines darunter angeordneten Lüftungsgitters 5a. Das bedeutet, daß für dieses Lüftungsgitter 5a, welches sich zwischen zwei Luftauslässen R mit Einbaurahmen 1 befindet, kein Einbaurahmen vorhanden sein muß.

## Patentansprüche

1. Verfahren zum Herstellen eines Luftauslasses aus einem Einbaurahmen mit einem eingesetzten Lüftungsgitter,
dadurch gekennzeichnet,
daß das Lüftungsgitter im Spritzverfahren, bevorzugt aus Kunststoff, hergestellt wird.

2. Verfahren nach Anspruch 1, dadurch gekennzeichnet, daß beim Spritzen in dem Lüftungsgitter auch drehbare Luftleitlamellen hergestellt werden.

3. Verfahren nach Anspruch 1 oder 2, dadurch gekennzeichnet, daß das Lüftungsgitter mit einem Gehäuse nach der Festlegung des Einbaurahmens in einer Wand, Decke, einem Boden od. dgl. in den Einbaurahmen eingesetzt und klemmend gehalten wird.

4. Verfahren nach einem der Ansprüche 1 - 3, dadurch gekennzeichnet, daß eine Mehrzahl von Luftgittern neben- oder übereinander miteinander verbunden wird.

5. Luftauslaß aus einem Einbaurahmen (1) mit einem eingesetzten Lüftungsgitter (5), dadurch gekennzeichnet, daß das Lüftungsgitter (5) aus einem spritzbaren Werkstoff, insbesondere aus Kunststoff, hergestellt ist.

6. Luftauslaß nach Anspruch 5, dadurch gekennzeichnet, daß das Lüftungsgitter (5) Verbindungszapfen (16) zum Verbinden mit benachbarten Lüftungsgittern (5a) aufweist.

7. Luftauslaß nach Anspruch 6, dadurch gekennzeichnet, daß der Verbindungszapfen (16) einen Pilzkopf (17) aufweist, dem eine entsprechend geformte Öffnung (18) in einem benachbarten Lüftungsgitter (5a) zugeordnet ist.

8. Luftauslaß nach einem der Ansprüche 5 - 7, dadurch gekennzeichnet, daß das Lüftungsgitter (5) seitlich Ausnehmungen (21) zur Aufnahme von Rastknöpfen (20) einer Randleiste (19) aufweist.

9. Luftauslaß nach wenigstens einem der Ansprüche 5 - 8, dadurch gekennzeichnet, daß zwischen einem Randflansch (4) des Einbaurahmens (1) und einem Rahmen (15) des Luftgitters (5) ein Einsteckschlitz (22) für einen Rahmen eines benachbarten Lüftungsgitters ausgebildet ist.
